# EUROPEAN PATENT APPLICATION

(11) **EP 1 935 836 A1**
(43) Date of publication of application: **25.06.2008**
(21) Application number: 07002706.5
(22) Date of filing: 08.02.2007
(51) Int. Cl.: B66C 23/78

(54) **Telescopic support device of mobile vehicle**

(30) Priority: 22.12.2006 CN 200610167698
(71) Applicant: Sany Heavy Industry Co., Ltd., Changsa Hunan 410100 (CN)
(72) Inventor: Yi, Xiaogang, Changsha,Hunan 410100 (CN); Yi, Xiuming, Changsha, Hunan 410100 (CN); Wang, Youyi, Changsha, Hunan 410100 (CN); Tong, Li, Changsha, Hunan 410100 (CN)
(74) Representative: Aulich, Martin

(57) **Abstract**

A support device for mobile vehicle, the support device comprising: a frame type base (5) mounted on a chassis (3) of mobile vehicle, a sleeve assembly which can extend/retract within the front part of said frame type base (5), a support part (1) which is mounted at the end of the sleeve assembly and can extent/retract vertically, wherein said sleeve assembly comprises of the a coaxial sleeve (4) and multi-stage telescopic arms (2). Said sleeve assemblies are arranged symmetrically as a V-shape relative to the central axis (X) of the vehicle. The sleeve (4) is located in the frame type base (5) and inclines forward. The coaxial sleeve (4) and the multi-stage telescopic arms (2) of the V-shape sleeve assembly are at the same level. The intersection point of the sleeves (4) arranged symmetrically of the sleeve assemblies is at the central of the frame type base (5).

## Description

### Field of this invention

This invention relates to a support device for mobile vehicle, more particularly, to a telescopic support device for a concrete pump vehicle.

### Background of this invention

There are two kinds of working ways for support legs of mobile vehicle such as concrete pump vehicle in prior art. In one way the telescopic support legs are arranged cross each other, and in another way the support legs are swing legs. The support legs can swing and/or extend or retract relative to the axle of chassis. Vertical cylinders for supporting are arranged at the ends of support legs to achieve a stable working condition during the operation process of the vehicle.

A mobile concrete pump vehicle provided with cross telescopic support legs is disclosed in EP0357988. Wherein the concrete pump vehicle has the technical features as follows: (1) having a two-axle or multiple-axle chassis, (2) with a distributor mast which is mounted on the chassis to be rotatable around a vertical axis, (3) the distributor mast being mounted to a mast seat near the front axle, (4) with two cross forward facing front support legs which are telescopic legs, and said front support legs are in different height, (5) with the front support legs being disposed with their telescopic pipes on a support frame which is rigidly connected to the mast seat, (6) and with two extendable rear support legs mounted in the region of the rearward end of the telescopic pipes, (7) the rear support legs are mounted to be pivotable around vertical axis, (9) and the rear support legs can be pivoted from their driving position, facing parallel to the chassis to the rear, into their diagonally rearward and outward facing support position.

There are some defects in EP0357988 as follows: in the contents of EP0357988, the forces coming from the distributor mast and to be conducted via the mast seat must be directed along the entire length of the vehicle to the rear support legs. This requires a costly chassis design. In addition, excessive buckling forces arise in the cross framework construction. The rear axle is subjected to additional weight loads. Finally, the support legs obstruct the fitting and handling of the concrete pump vehicle in the region behind the rear axle. Such telescopic cross support legs can not solve the problems of perfect force bearing and occupying the lower space at the same time since the reason of their profile and size. Furthermore, the telescopic support legs must be arranged in different height because of the cross construction limitation which applies asymmetrical forces to the chassis to reduce the total efficiency of the vehicle.

A kind of swing support legs are disclosed in DE-3124029. Wherein the pivot bearing of the front support legs are hinged slightly behind the cab and the front support legs can pivot around said pivot bearings toward the rear direction during traveling. The front pivot bearings connect the rear pivot bearings through longitudinal beams, and support legs are mounted on said longitudinal beanis. Such arrangement is verified to be reliable since the distance between the pivot points and the support legs is large enough resulting from the combination of the rotation and extension/ retraction of support legs. Therefore, there is large side space for the rotation of the front support legs. However, such apparatus can not be utilized at narrow construction sites which afford very little lateral free space since its dimensional sizes are limited by the construction sites.

In view of this, this invention aims to provide an improved telescopic support device to solve the defects in the prior art. The device of this invention brings the following advantages to mobile vehicle such as concrete pump vehicle, for example, (1) with compact construction, (2) the space of the support device can be utilized adequately, (3)the right support leg and left support leg can receive more balanced forces to improve the stability of the vehicle during operation.

### Summary of this invention

This invention relates to a support device for concrete pump vehicle. As it is known to the skilled person in this art, the concrete pump vehicle comprises of a chassis, a rotating mechanism mounted on said chassis, a distributor mast, a pumping device and a support device. The chassis comprises of at least one rear axle. The distributor mast is connected with the rotating mechanism and extends at the working condition and folds over the chassis during the period of non-working. Said rotating mechanism, distributor mast, pumping device and support device are mounted on the chassis and said pumping device is located behind the rotating mechanism.

The support device for mobile vehicle is telescopic type support device, which comprises of a frame type base mounted on the chassis, a sleeve assembly which can extend/retract within said frame type base, a support part which is mounted at the end of the sleeve assembly and can extent/retract vertically. Said sleeve assemblies are arranged symmetrically as a V-shape relative to the central axis of the vehicle and comprise of the coaxial sleeves and multi-stage telescopic arms. The sleeve is located in the frame type base and inclines forward. The multi-stage telescopic arms of said sleeve assembly can extend/retract horizontally in the sleeve. The support part at the end of said multi-stage telescopic arms can extend vertically to contact the ground to support the vehicle when the multi-stage arms extend partially or fully. Said multi-stage telescopic arms retract into the sleeve during traveling condition.

Wherein, the right/left sleeves and the multi-stage telescopic arms of the V-shape sleeve assemblies are at the same level.

Wherein, said multi-stage telescopic arms comprise two or more telescopic arms.

Wherein the intersection point of the sleeves arranged symmetrically of the sleeve assemblies is at the central of the frame type base.

In particularly, the frame type base has a rectangle construction.

Furthermore, swing rear support legs are arranged at the left and right corners of the rear part of the frame type base. Said rear support legs are connected with the frame type base through vertical rotation axles, and vertical support parts for the rear support legs are arranged at the ends of the rear support legs.

### Brief description of drawings

Figure 1 is a top plan view of the concrete pump vehicle relative to this invention.
Figure 2 is an elevated view of the support device of this invention.

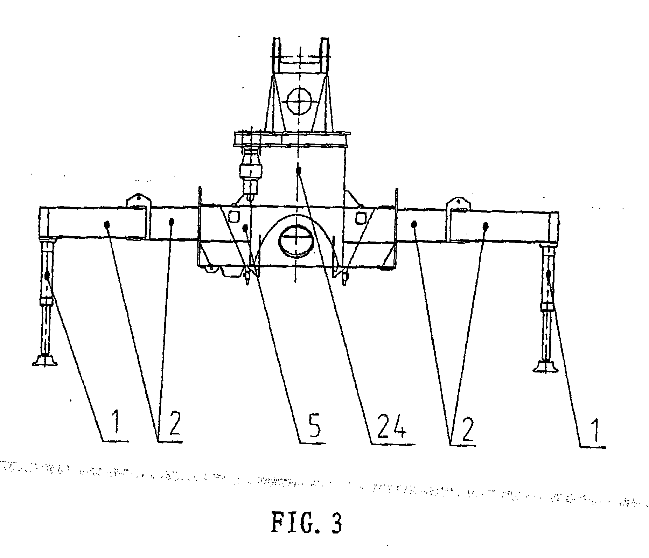

Figure 3 is a view along the direction A of figure 1 (chassis and distributor mast are omitted).

### Detailed description of the invention

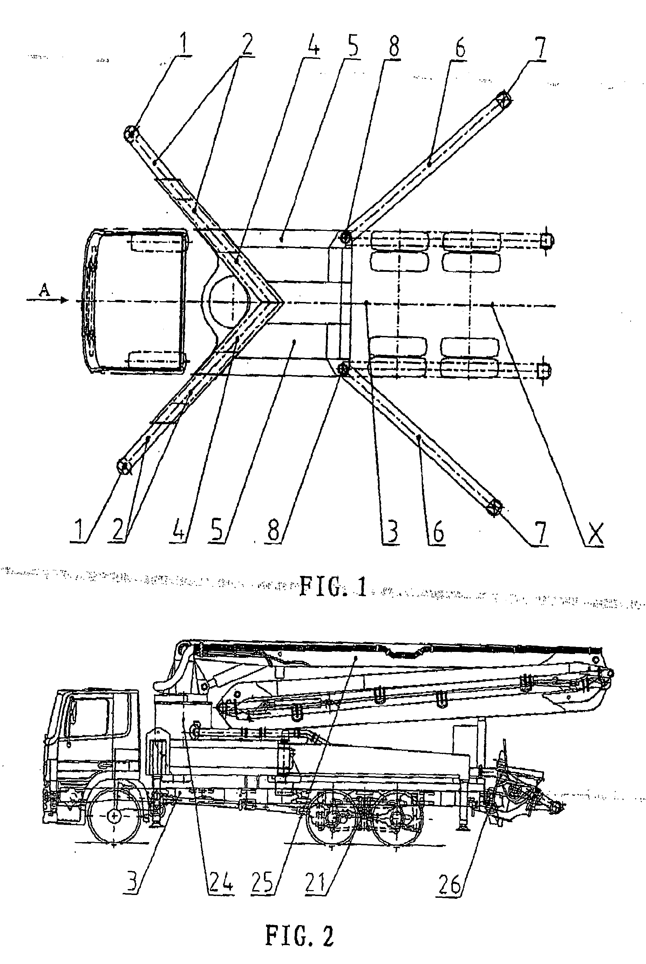

Reference to figures 1 and 2, the support device according to this invention will be described in the following contents.

Wherein figure 1 is a top plan view of the concrete pump vehicle relative to this invention and figure 2 is an elevated view of the support device of this invention. As shown in figure 1, the concrete pump vehicle includes a chassis 3, a rotating mechanism 24 mounted on said chassis 3, a distributor mast 25, a pumping device 26 and a support device. The chassis 3 includes at least one rear axle 21. The distributor mast 25 is connected with the rotating mechanism 24 and extends at the working condition and folds over the chassis 3 during the period of non-working. Said rotating mechanism 24, distributor mast 25, pumping device 26 and support device are mounted on the chassis 3 and said pumping device 26 is located behind the rotating mechanism 24.

The support device for mobile vehicle is telescopic type support device, which comprises of a rectangle frame type base 5 mounted on the chassis 3, a sleeve assembly which can extend/retract within said frame type base 5, a support part 1 which is mounted at the end of the sleeve assembly and can extent/retract vertically. In this embodiment, said support part 1 is but not limited to an adjustable hydraulic cylinder. Said sleeve assemblies are arranged symmetrically as a V-shape relative to the central axis of the vehicle and comprise of the coaxial sleeve 4 and multi-stage telescopic arms 2. The sleeve 4 is located in the frame type base 5 and inclines forward. The multi-stage telescopic arms 2 of said sleeve assembly can extend/retract horizontally in the sleeve 4. The support part 1 at the end of said multi-stage telescopic arms 2 can extend vertically to contact the ground to support the vehicle when the multi-stage arms 2 extend partially or fully. Said multi-stage telescopic arms 2 retract into the sleeve 4 during traveling condition.

Wherein, the sleeve assemblies arranged as V-shape are symmetrical relative to the central axis X of the chassis 3. The right/left sleeves and the multi-stage telescopic arms of the V-shape sleeve assemblies are at the same level.

Wherein, said multi-stage telescopic arms 2 comprise two or more telescopic arms.

Wherein the intersection point of the sleeves 4 arranged symmetrically of the sleeve assemblies is at the central of the frame type base 5.

Furthermore, swing rear support legs 6 are arranged at the left and right corners of the rear part of the frame type base 5. Said rear support legs 6 are connected with the frame type base 5 through vertical rotation axles 8, and vertical support parts 7 are arranged at the ends of the rear support legs 6. In this embodiment, the vertical support parts 7 are but not limited to hydraulic cylinder.

During traveling of the concrete pump vehicle, the multi-stage telescopic arms 2 are fully retracted in sleeve 4 by the hydraulic cylinder (not shown) of sleeve 4. The multi-stage telescopic arms 2 extend partially or fully from the sleeve 4 by the hydraulic cylinder (not shown) and said vertical support part 1 contacts the ground during working operation.

The form of the invention shown and described above represents illustrative non-limiting embodiment of the invention. It is understood that various changes may be made without departing from the teachings of the invention defined by the claimed subject matter that follows.

## Claims

1. A support device for mobile vehicle, the support device comprising: a frame type base (5) mounted on a chassis (3) of the mobile vehicle, a sleeve assembly which can extend/retract within the front part of said frame type base (5), and a support part (1) which is mounted at the end of the sleeve assembly and can extent/retract vertically, wherein said sleeve assembly comprises of the a coaxial sleeve (4) and multi-stage telescopic arms (2),
Wherein, said sleeve assemblies are arranged symmetrically as a V-shape relative to the central axis (X) of the vehicle, the sleeve (4) is located in the frame type base (5) and inclines forward, the sleeve (4) and the multi-stage telescopic arms (2) of the V-shape sleeve assemblies are at the same level.

2. The support device as claimed in claim 1, wherein the telescopic arms (2) of said sleeve assembly can extend/retract horizontally in the sleeve (4).

3. The support device as claimed in claim 1 or 2, wherein, said multi-stage telescopic arms comprise two or more telescopic arms.

4. The support device as claimed in claim 1 or 2, wherein the intersection point of the sleeves (4) arranged symmetrically of the sleeve assemblies is at the central position of the frame type base.

5. The support device as claimed in claim 1 or 2, wherein said frame type base (5) is rectangle shape.
